# EUROPEAN PATENT APPLICATION

(11) **EP 4 360 849 A1**
(43) Date of publication of application: **01.05.2024**
(21) Application number: 23203824.0
(22) Date of filing: 16.10.2023
(51) Int. Cl.: B29C 33/48, B29C 70/46

(54) **EXPANDABLE MALE DIE BLADDER FOR MATCH DIE SHAPE-FORMING SYSTEMS AND METHODS**

(30) Priority: 31.10.2022 US 202217977913
(71) Applicant: Rohr, Inc., Chula Vista, CA 91910-2098 (US)
(72) Inventor: WAUGH, Katherine E., San Diego (US); KOROLY, Christopher C., Spring Valley (US); PUJAR, Vijay V., San Diego (US); LINCK, John S., Pueblo (US); ROSENBROCK, Kyle, Pueblo (US)
(74) Representative: Dehns

(57) **Abstract**

A shape forming tool (120) for pre-carbonization compression of a fibrous preform (110) includes a female forming tool (122) comprising a die recess (182), a first die half (126) configured to be received by the die recess, a second die half (128) configured to be received by the die recess, an expander tool coupled between the first die half and the second die half. The expander tool is configured to move the first die half laterally toward a first side of the female forming tool away from the second die half to compress the fibrous preform between the first die half and the female forming tool. The expander tool is further configured to move the second die half laterally toward a second side of the female forming tool away from the first die half to compress the fibrous preform between the second die half and the female forming tool.

## Description

### FIELD

The present disclosure relates to systems and methods for shape forming composites, and more specifically, to systems and methods for shape forming carbon/carbon (C/C) composites.

### BACKGROUND

Composite bodies are utilized in various industries, including the aerospace industry. C/C composites are often produced as planar (e.g., flat plate) structures, for example utilizing planar oxidized polyacrylonitrile (PAN) fiber-based preforms followed by carbonization and chemical vapor infiltration (CVI) densification.

### SUMMARY

According to various embodiments, a shape forming tool is disclosed, comprising a first shape forming tool sub-assembly (also referred to herein as a female forming tool) comprising a die recess and a second shape forming tool sub-assembly (also referred to herein as an expandable male die arrangement). The second shape forming tool sub-assembly comprises a first die half configured to be received by the die recess, a second die half configured to be received by the die recess, and a first expander tool coupled between the first die half and the second die half. The first expander tool is configured to move the first die half laterally toward a first side of the first shape forming tool sub-assembly away from the second die half. The first expander tool is further configured to move the second die half laterally toward a second side of the first shape forming tool sub-assembly away from the first die half.

In various embodiments, the first expander tool comprises a cam shaft. In various embodiments, the first expander tool comprises an actuator. In various embodiments, the first expander tool comprises a reciprocating rod member and a gear configured to meshingly engage with the reciprocating rod member.

In various embodiments, the shape forming tool further comprises a caul plate configured to be disposed at least partially between the first shape forming tool sub-assembly and the second shape forming tool sub-assembly. In various embodiments, the caul plate is disposed at least partially between the first die half and the second die half.

In various embodiments, the first die half comprises a first plurality of feet and the second die half comprises a second plurality of feet, and the first plurality of feet are configured to be interposed between the second plurality of feet.

In various embodiments, the second shape forming tool sub-assembly further comprises a bladder configured to be disposed between the first die half and the second die half.

In various embodiments, the second shape forming tool sub-assembly further comprises an apparatus configured to apply a force to the first die half and the second die half, wherein the force is perpendicular to a lateral direction.

In various embodiments, the first die half comprises a first channel configured to accommodate a first half of the first expander tool and the second die half comprises a second channel configured to accommodate a second half of the first expander tool.

In various embodiments, the second shape forming tool sub-assembly further comprises a center die disposed between the first die half and the second die half and a second expander tool disposed between the second die half and the center die. The first expander tool is disposed between the first die half and the center die.

A shape forming tool sub-assembly is disclosed, comprising a first die half, a second die half moveable with respect to the first die half, and a first expander tool coupled between the first die half and the second die half. In response to actuating the first expander tool, the first die half is configured to move away from the second die half.

In various embodiments, a total height of the first die half, measured along a vertical direction, is equal to that of the second die half.

In various embodiments, the first die half comprises a first channel configured to accommodate a first half of the first expander tool and the second die half comprises a second channel configured to accommodate a second half of the first expander tool.

In various embodiments, the first die half comprises a first plurality of feet and the second die half comprises a second plurality of feet, and the first plurality of feet are configured to be interposed between the second plurality of feet.

In various embodiments, the shape forming tool sub-assembly further comprises a caul plate. The caul plate can be configured to be disposed between the first die half and the second die half. The caul plate can be configured to be disposed proximate to at least one of the first die half and the second die half. The caul plate is configured to be disposed at least partially between the shape forming tool sub-assembly (e.g., the first die half and/or the second die half) and a fibrous preform.

In various embodiments, the shape forming tool sub-assembly further comprises a bladder configured to be disposed between the first die half and the second die half.

In various embodiments, the shape forming tool sub-assembly further comprises a center die disposed between the first die half and the second die half, and a second expander tool. The first expander tool can be disposed between the first die half and the center die. The second expander tool can be disposed between the second die half and the center die.

In various embodiments, the first expander tool and/or the second expander tool comprises a cam shaft. In various embodiments, the first expander tool and/or the second expander tool comprises a linear actuator. In various embodiments, the first expander tool and/or the second expander tool comprises a reciprocating rod member and a gear configured to meshingly engage with the reciprocating rod member.

A method for manufacturing a C/C part is disclosed, the method comprising positioning an fibrous preform with a first shape forming tool sub-assembly, the first shape forming tool sub-assembly comprising a die recess and forming the fibrous preform into a shaped body. The forming comprises moving a second shape forming tool sub-assembly at least partially into the die recess and over the fibrous preform, wherein the second shape forming tool sub-assembly comprises a first die half, a second die half, and an expander tool disposed between the first die half and the second die half, actuating the expander tool, and applying a force to the first die half and the second die half to move the first die half and the second die half along a first axis. In response to actuating the expander tool, moving the first die half away from the second die half along a second axis different from the first axis.

In various embodiments, the method further comprises, in response to the first die half moving away from the second die half, compressing the fibrous preform between the first die half and the first shape forming tool sub-assembly and between the second die half and the first shape forming tool sub-assembly.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1A is a schematic sectional illustration of a shape forming system for pre-carbonization compression and shaping a fibrous preform into a shaped body prior to its expander tool being activated, in accordance with various embodiments;
FIG. 1B is a schematic sectional illustration of the system of FIG. 1A with its expander tool activated to apply lateral forces to the fibrous preform, in accordance with various embodiments;
FIG. 2 is a perspective illustration of a cam, in accordance with various embodiments;
FIG. 3 is a perspective illustration of a die half, in accordance with various embodiments;
FIG. 4 is a perspective illustration of a female forming tool (a female die), in accordance with various embodiments;
FIG. 5 is a schematic sectional view of the shape forming system with a planar fibrous preform placed over the female forming tool and the first and second die halves located over the fibrous preform, in accordance with various embodiments;
FIG. 6A is a schematic sectional view of the shape forming system with gripper plates in a closed position, in accordance with various embodiments;
FIG. 6B is a schematic sectional view of a gripper plate having protrusions in a closed position, in accordance with various embodiments;
FIG. 7 is a flow diagram of a method for forming a preform into shaped body, in accordance with various embodiments;
FIG. 8 is a perspective illustration of a die half having a plurality of feet, in accordance with various embodiments;
FIG. 9 is a top view of first and second die halves each having a plurality of feet interposed with respect to one another, in accordance with various embodiments;
FIG. 10A is a schematic sectional illustration of the shape forming system of FIG. 1B and further including a caul plate, in accordance with various embodiments;
FIG. 10B is a schematic sectional illustration of the shape forming system of FIG. 1B and further including a bladder, in accordance with various embodiments;
FIG. 11A is a schematic sectional illustration of a shape forming system having a linear actuator expander tool, in accordance with various embodiments;
FIG. 11B is a schematic sectional illustration of the system of FIG. 11A with its linear actuator expander tool activated (e.g., in an extended position) to apply lateral forces to the fibrous preform, in accordance with various embodiments;
FIG. 12 is a schematic sectional illustration of a shape forming system having a linear slider expander tool, in accordance with various embodiments;
FIG. 13 is a schematic illustration of first and second die halves having a cam expander tool disposed therebetween with the cam located in opposing channels of the first and second die halves, in accordance with various embodiments;
FIG. 14 is a perspective illustration of a die half of the system of FIG. 13 having a channel for the cam expander tool, in accordance with various embodiments;
FIG. 15 is a schematic sectional illustration of a shape forming system for pre-carbonization compression and shaping a fibrous preform into a shaped body with a center die, two die halves, and two associated expander tools, in accordance with various embodiments;
FIG. 16A and FIG. 16B are schematic illustrations of a mechanical actuator for the cam expander tool of the shape forming system, in accordance with various embodiments;
FIG. 17A is a perspective illustration of a shape forming system having a primary camshaft for actuating an expander tool and a secondary camshaft for actuating a caul plate, in accordance with various embodiments;
FIG. 17B is a perspective illustration of the shape forming system of FIG. 17A with the primary and secondary camshafts actuated, in accordance with various embodiments;
FIG. 18 is a schematic illustration of a shape forming system having a geared expander tool and associated mounting plates, in accordance with various embodiments; and
FIG. 19 is a schematic sectional illustration of a shape forming system for pre-carbonization compression and shaping a fibrous preform into a shaped body with stops for mechanically limiting the expansion of the actuated dies, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "fiber volume ratio" means the ratio of the volume of the fibers of the fibrous preform to the total volume of the fibrous preform. For example, a fiber volume ratio of 25% means the volume of the fibers in the fibrous preform is 25% of the total volume of fibrous preform.

As used herein, the term "fiber density" is used with its common technical meaning with units of g/cm³ or g/cc. The fiber density may refer specifically to that of the individual fibers in the fibrous preform. The density will be measured, unless otherwise noted, by taking the weight divided by the geometric volume of each fiber. The density may refer to an average density of a plurality of fibers included in a fibrous preform.

As used herein, "CVI/CVD" may refer to chemical vapor infiltration and/or chemical vapor deposition. Accordingly, CVI/CVD may refer to chemical vapor infiltration or deposition or both.

In general, there are several methods of manufacturing carbon/carbon ("C/C") materials depending on the part geometries and the end application performance requirements. One method involves starting with a carbon fiber or fabric that is pre-impregnated with a polymer resin. Process steps for forming a shaped part include the steps of laying-up of several layers of the pre-impregnated fabric onto a tool to form a preform, cure of the fiber-reinforced resin preform to form a rigid shape, pyrolysis of the cured shape to decompose or pyrolyze the resin leaving behind carbon fiber and a matrix comprising of carbon or substantially carbon (>85% by weight of the pyrolyzed resin). In this method, additional polymer resin infiltration and pyrolysis cycles may be employed to increase the amount of carbon matrix in the composites, or until the part achieves the desired density. A second method involves starting with a dry fibrous preform, forming the preform into a shape using a closed molding die or other similar suitable forming methods, fixturing the formed shape into suitable graphite fixtures designed to maintain the formed shape but with perforations for allowing gases to flow, and depositing carbon matrix on the fibers by chemical vapor infiltration (CVI) using suitable reactant gases, pressures and temperatures to fill the voids between the fibers and densify the part. The chemical vapor infiltration cycles may continue, in conjunction with intermediate machining of the surfaces of the preform between infiltration cycles if desired, until the desired part density is achieved.

The fibrous preforms in the foregoing method may consist of carbon fibers, silicon carbide fibers, or a precursor to these fibers. In one embodiment, the fibrous preform may comprise of oxidized polyacrylonitrile (PAN) fiber, or OPF. In various embodiments, the polymer resins used for infiltration may comprise any suitable resin that may be infused or impregnated into the carbon fabric layers or other fibrous preform, forming shapes and when heated to suitable temperatures is able to pyrolyze or decompose leaving behind carbon, or substantially carbon (>85%). Examples of resins include, but are not limited to, phenolic resins, mesopitch, benzoxazines, poly-ether ether ketone (PEEK), polyaryl ether ketone (PAEK), or combinations thereof. Combinations of these methods may be used and may include variations in preform architecture, infiltration resin type, and chemical vapor infiltration conditions. For example, a method may involve a combination of layup, cure, and pyrolysis of a carbon fiber reinforced polymer resin matrix composite, and followed by additional densification of the composite using chemical vapor infiltration.

In the methods involving the use of OPF for making preforms, the preforms are heat-treated to convert the OPF into carbon fibers prior to further densification with resin or chemical vapor infiltration. Typically, fibrous preforms are heat-treated by placing the preforms in a furnace with an inert atmosphere. As is well-understood, the heat of the furnace causes a chemical conversion which drives off the non-carbon chemical species from the preform. The resulting preform after heat-treatment generally has the same fibrous structure as the fibrous preform before carbonizing or heat-treating; however, the OPF have been converted to substantially carbon, with total carbon content generally greater than 85% by weight. As used herein, heat-treatment of OPF may be referred to as carbonization, and heat-treating may be referred to as carbonizing, and the terms may be used interchangeably. While heat-treatment of OPF may be performed to convert the OPF to carbon fibers, other fibers, for example carbon fibers or silicon carbide fibers, may also be heat-treated prior to densification with matrix in order to drive off any volatile species that may hinder or otherwise have an adverse effect on the densification process. After the preform has been heat-treated or carbonized, the preform is densified. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix.

In the methods involving densification by chemical vapor infiltration, this commonly involves heating the furnace and the carbonized preforms, and flowing hydrocarbon gases into the furnace and around and through the fibrous preforms. As a result, carbon from the hydrocarbon gases separates from the gases and is deposited on and within the fibrous preforms. When the densification step is completed, the resulting C/C part has a carbon fiber structure with a carbon matrix infiltrated into the preform and surrounding the fiber structure, thereby deriving the name "carbon/carbon".

C/C parts of the present disclosure may be formed using fabrics that are shape-formed prior to carbonization. C/C parts of the present disclosure may be formed using multi-axial, non-crimp, stitchbonded fabrics that are shape-formed prior to carbonization. C/C parts of the present disclosure may be particularly useful for high temperature aerospace applications. C/C parts of the present disclosure may be especially useful in these applications because of the superior high temperature characteristics of C/C material. In particular, the carbon/carbon material used in C/C parts is a good conductor of heat and is able to dissipate heat generated during high temperature conditions. Carbon/carbon material is also highly resistant to heat damage, and thus, may be capable of sustaining forces during severe conditions without mechanical failure. Carbon/Carbon material also exhibits suitable friction coefficient and wear performance capable of use in braking applications.

C/C components including leading edges, structural members and other contour-shape carbon composites are often produced as 2D planar structures (i.e., flat, planar components); however, these materials tend to maintain low interlaminar properties. A shape formed 3D C/C part offers opportunity for similar in-plane C/C properties with higher interlaminar properties than flat plate C/C. While the foregoing references preforms that comprise carbon fibers, the method may also be applied to other fibers, for example, oxidized PAN, silicon carbide, boron carbide, boron nitride, silicon nitride fibers, or combinations of two or more fibers.

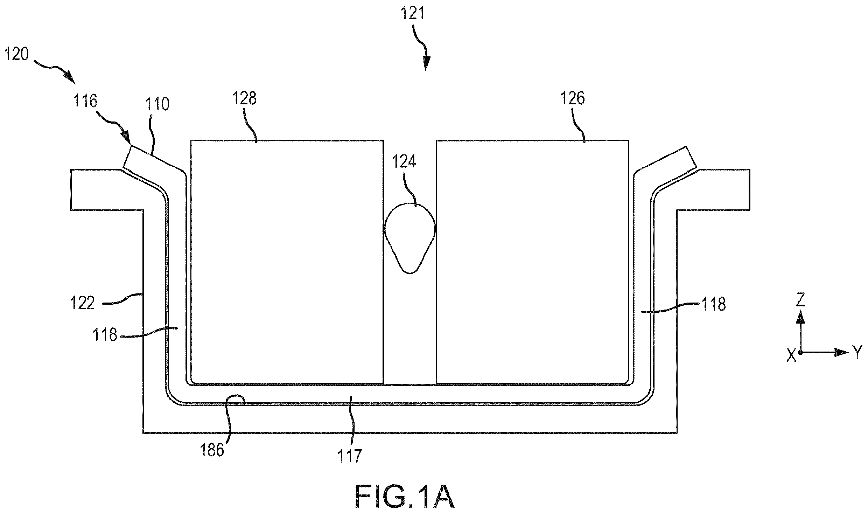

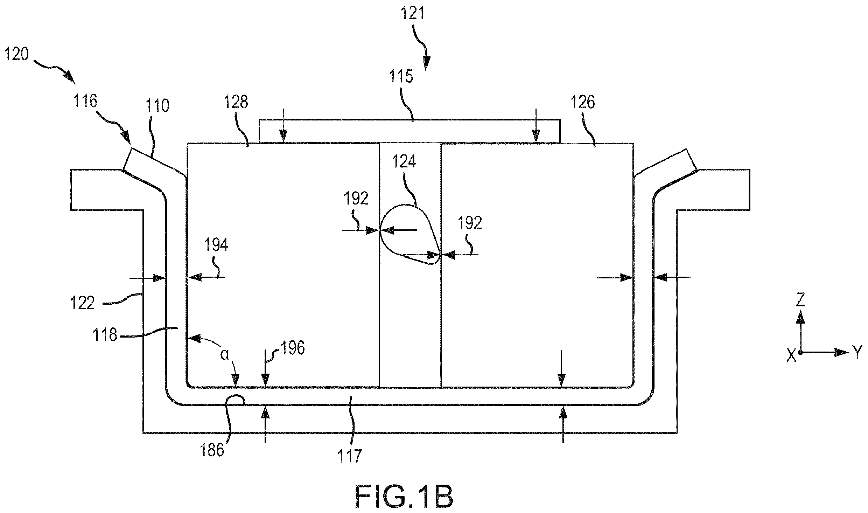

FIG. 1A and FIG. 1B are schematic views of a shape forming tool 120 for pre-carbonization compression and shaping a fibrous preform 110, in accordance with various embodiments. Shape forming tool 120 may be configured as a matched die forming tool. Shape forming tool 120 may be configured for forming a shaped fibrous preform 110 from a multi-layered preform; e.g., a stack of a plurality of layers of material. Shape forming tool 120 may include a first forming tool sub-assembly 122 (also referred to herein as a female forming tool) and a second shape forming tool sub-assembly 121 (also referred to herein as an expandable male die arrangement) comprising an expander tool, such as a cam 124, a first die half 126, and a second die half 128 (the expander tool, first die half, and second die half collectively referred to herein as a shape forming tool sub-assembly). This expandable male die arrangement 121 allows the shape forming tool 120 to have enough flexibility to maintain pressure application on the sidewalls 118 of the fibrous preform 110 as the thickness of the material decreases during the pre-carbonization compression process. In various embodiments, female forming tool 122, cam 124, first die half 126, and second die half 128 are made from a metal or metal alloy material. In various embodiments, female forming tool 122, cam 124, first die half 126, and second die half 128 are made from a composite material, such as graphite for example.

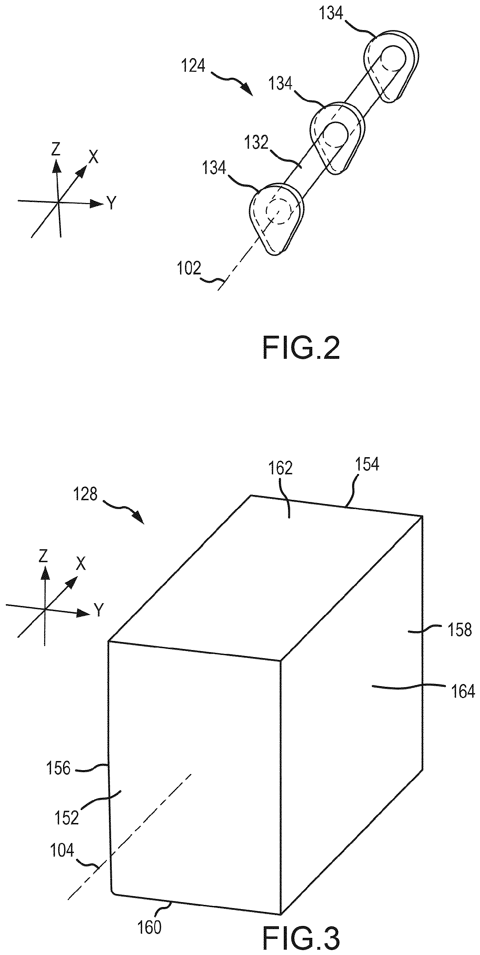

FIG. 2 is a perspective view of cam 124, in accordance with various embodiments. Cam 124 may comprise a cam shaft 132 which extends longitudinally along a longitudinal centerline 102 of the cam 124 (e.g., along an X-axis). One or more cam lobes 134 may be coupled to and rotate with the cam shaft 132. A drive mechanism, such as an electric motor, may be coupled to the cam shaft 132 to rotate the one or more cam lobes 134 for expanding the expandable male die arrangement (i.e., by moving the first die half 126 away from the second die half 128). Any number of cam lobes 134 may be disposed along the cam shaft 132 as desired. As the cam lobe(s) 134 rotate about the longitudinal centerline 102, the lateral dimension or width (measured along the Y-axis) of the cam lobe(s) 134 increases to push the first die half 126 away from the second die half 128. Each of the cam lobes 134 may be rotationally aligned such that they each point in the same radial direction, though the lobes 134 may not be aligned in accordance with various embodiments depending on the desired movement of the first die half 126 and/or the second die half 128 at different longitudinal locations (e.g., along the X-axi s).

FIG. 3 is a perspective view of the second die half 128, in accordance with various embodiments. Second die half 128 extends longitudinally along a longitudinal centerline 104 of the second die half 128 (e.g., along an X-axis) between and to a first end 152 of the second die half 128 and a second end 154 of the second die half 128. The second die half 128 extends laterally (e.g., along a Y-axis) between and to a first side 156 of the second die half 128 and a second side 158 of the second die half 128. The second die half 128 extends vertically (e.g., along a Z-axis) between and to a bottom side 160 of the second die half 128 and a top side 162 of the second die half 128.

In various embodiments, the first side 156 is shaped to conform to a geometry of a side surface of the female forming tool 122. In various embodiments, the first side 156 comprises a vertical surface. However, first side 156 may be at an angle with respect to a vertical direction depending on the desired shape of the final C/C part. The second side 158 may comprise a contact surface 164 configured to engage (e.g., directly contact) cam 124 whereby preform compressing forces (represented by arrows 192 in FIG. 1B)-e.g., in response to cam 124 being rotated (e.g., about longitudinal centerline 102)- are transmitted therebetween for moving the second die half 128 in the lateral direction (e.g., along the Y-axis) to compress (e.g., see compression forces represented by arrows 194 in FIG. 1B) a sidewall 118 of the fibrous preform 110. The first die half 126 may be structurally similar to the second die half 128. The first die half 126 may exhibit a mirrored geometry with that of the second die half 128 in various embodiments.

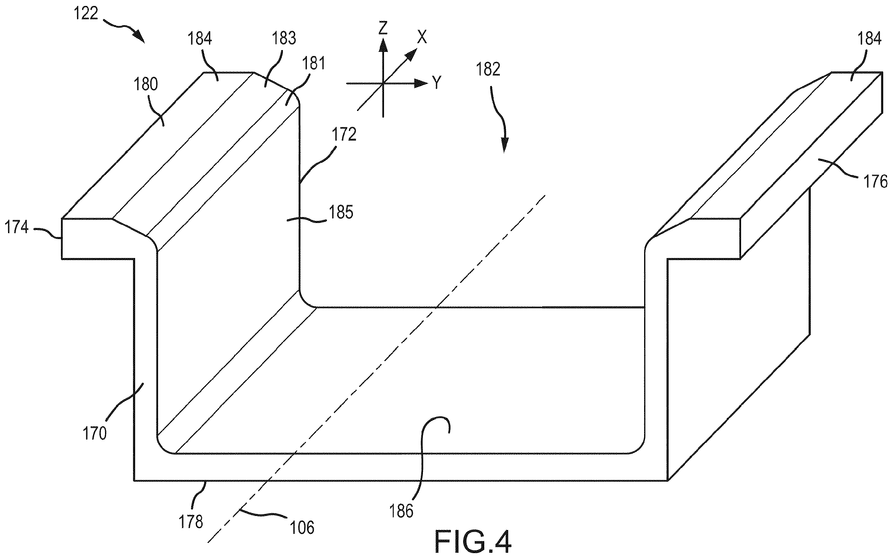

With reference to FIG. 4 the female forming tool 122 extends longitudinally along a longitudinal centerline 106 of the female forming tool 122 (e.g., along X-axis) between and to a first end 170 of the female forming tool 122 and a second end 172 of the female forming tool 122. The female forming tool 122 extends laterally (e.g., along a Y-axis) between and to a first side 174 of the female forming tool 122 and a second side 176 of the female forming tool 122. The female forming tool 122 extends vertically (e.g., along a Z-axis) between and to a bottom side 178 of the female forming tool 122 and a top side 180 of the female forming tool 122.

The female forming tool 122 is configured with at least one die recess 182; e.g., an aperture such as a pocket, a channel, a groove, etc. The die recess 182 of FIG. 4 extends (e.g., partially) vertically into the female forming tool 122 from one or more top surfaces 184 of the female forming tool 122 to a recess surface 186 of the female forming tool 122, where the top surfaces 184 of FIG. 4 are arranged on opposing sides of the recess surface 186 at the female forming tool top side 180. The die recess 182 of FIG. 4 extends longitudinally in (e.g., through) the female forming tool 122, for example, between and to the female forming tool first end 170 and/or the female forming tool second end 172. The die recess 182 of FIG. 4 extends laterally in (e.g., within) the female forming tool 122, for example, between opposing lateral sides of the recess surface 186.

The recess surface 186 is a concave or concave-convex surface and may have a curved geometry; e.g., a three-dimensional (3D) curvature. The recess surface 186 of FIG. 4, for example, has a curved (e.g., arcuate, splined, etc.) cross-sectional geometry in a lateral-vertical reference plane; e.g., a Y-Z plane. The recess surface 186 may also have a curved (e.g., arcuate, splined, etc.) cross-sectional geometry in a longitudinal-vertical reference plane; e.g., a X-Z plane. This recess curvature may change as the recess surface 186 / the die recess 182 extends laterally and/or longitudinally, which may provide the recess surface 186 with a complex 3D curvature. In embodiments, the recess curvature may remain uniform as the recess surface 186 / the die recess 182 extends laterally and/or longitudinally. The recess surface 186 may be configured without any sharp corners or sharp transitions.

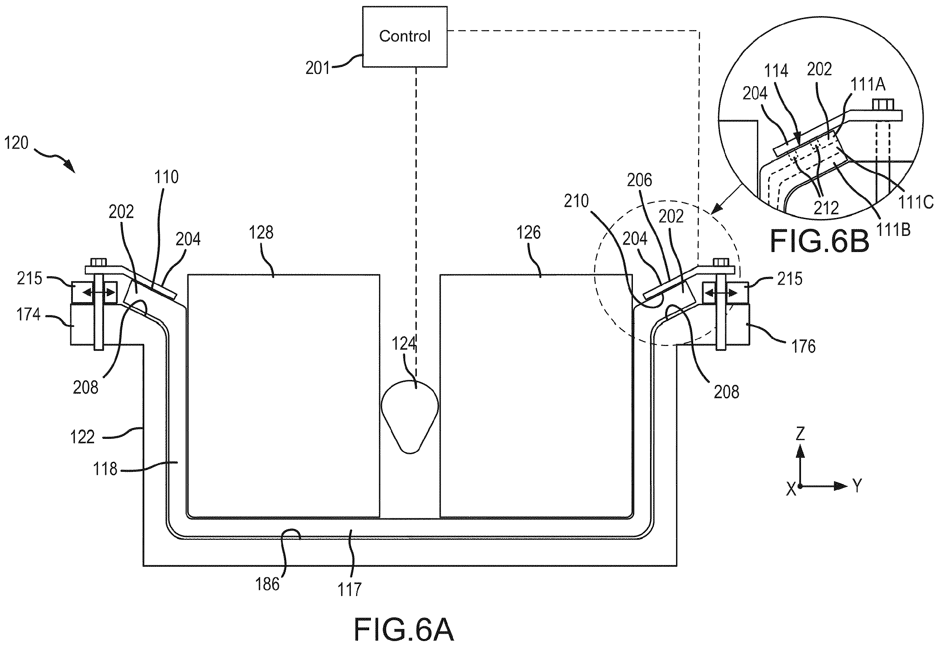

In various embodiments, the recess surface 186 comprises a radii surface 181 which forms a rounded, convex surface transition between a sidewall portion 185 of the recess surface 186 and the female forming tool top surface 184. The fibrous preform may be bent around or over radii surface 625. Radii surface 181 may minimize wrinkling of the fibrous preform 110 during the forming process. Radii surface 181 may facilitate attachment of lateral ends of fibrous preform 110 to gripper plates (e.g., see gripper plates 204 of FIG. 6A). Radii surface 181 may extend between and to the female forming tool first end 170 and the female forming tool second end 172. In various embodiments, an angled surface 183 oriented at an angle (e.g., between 5 and 75 degrees) with respect to the female forming tool top surface 184 is disposed between the radii surface 181 and the female forming tool top surface 184. Angled surface 183 may extend between and to the female forming tool first end 170 and the female forming tool second end 172.

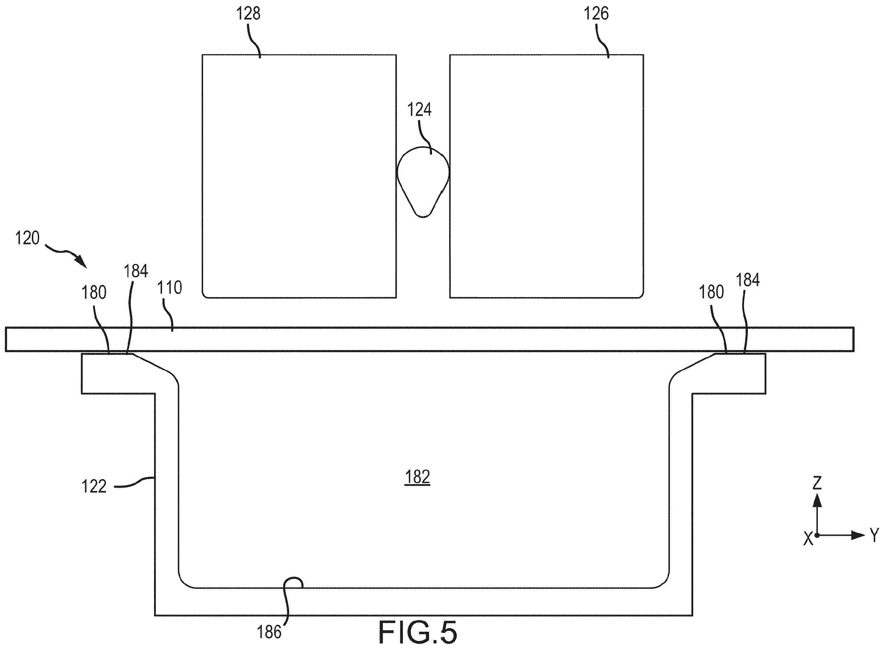

With reference to FIG. 5, the fibrous preform 110 comprises a generally planar preform and may be placed over the female forming tool 122. The first die half 126 and second die half 128 are moveable with respect to the female forming tool 122 to compress the fibrous preform 110 therebetween, thereby shaping and compressing the fibrous preform 110.

Methods for manufacturing a C/C part of the present disclosure include pre-carbonization compression of a fibrous preform 110. Fibrous preform 110 may comprise polyacrylonitrile (PAN), OPF, or CF fibers extending in three directions and leaving a plurality of pores or open spaces and may be prepared for shape-forming, compression, and carbonization. In various embodiments, fibrous preform 110 is formed by stacking layers of fibers and superimposing the layers (e.g., by stacking sheets of fabric). The layers may be reinforced perpendicularly to each other (i.e., along the Z-direction) with barbed, textile needles or barbless, structuring needles (e.g., needling, stitching, and/or tufting). In various embodiments, the layers are needled at an angle of between 0° and 80° (e.g., 0°, 30°, 45°, 60°, 80°, etc.) with respect to the Z-direction to each other. The through thickness reinforcement process generates a series of z-fibers through fibrous preform 110 that extend perpendicularly to the fibrous layers. The z-fibers are generated through the action of the needles pushing fibers from within the layer (x-y or in-plane) and reorienting them in the z-direction (through-thickness). Through thickness reinforcement of the fibrous preform may be done as one or more layers are added to the stack or may be done after the entire stack of layers is formed. The needles may also penetrate through only a portion of fibrous preform 110, or may penetrate through the entire fibrous preform 110. In addition, resins are added, in various embodiments, to fibrous preform 110 by either injecting the resin into the preform following construction or coating the fibers or layers prior to forming the fibrous preform 110. The through thickness reinforcement process may take into account needling parameters optimized to maintain fiber orientation, minimize in-plane fiber damage, and maintain target interlaminar properties.

After through thickness reinforcement of the fibrous preform 110 (if through thickness reinforcement is performed), the non-woven fibrous preform 110 may be both compressed to higher fiber volume ratio and formed to shape in a single-step shape-forming process (i.e., using the shape forming tool of the present disclosure). It should be understood, moreover, that fibrous preforms 110 not subject to through thickness reinforcement prior to pre-carbonization compression are also within the scope of the present disclosure.

After the fibrous preform 110 is placed over the female forming tool 122, the first die half 126 and second die half 128 are placed over the fibrous preform 110 and into the female forming tool 122, thereby beginning the shaping and compressing of the fibrous preform 110 as the fibrous preform is pressed into the female forming tool 122. In various embodiments, the first die half 126 and/or second die half 128 may be first placed into the female forming tool 122 to push the fibrous preform 110 down to the bottom of the recess surface 186. In various embodiments, the fibrous preform 110 may also be first pushed down to the bottom of the recess surface 186.

With reference to FIG. 6A, once the fibrous preform 110 is generally pushed down (in the negative Z-direction) in place against the bottom of the recess surface 186 (e.g., by hand or using the first die half 126 and/or second die half 128, for example), the opposing lateral ends 202 of fibrous preform 110 may be clamped to female forming tool 122 using one or more gripper plates 204. The gripper plates 204 may be arranged in one or more arrays disposed along a respective opposing side 174, 176 of the female forming tool 122. In various embodiments, discrete gripper plates 204 are longitudinally spaced from each neighboring (e.g., adjacent) gripper plate 204 in the same gripper plate array.

However, in various embodiments, a single gripper plate 204 may extend longitudinally along the side of the female forming tool 122.

Each gripper plate 204 may include a first plate portion 206 oriented substantially parallel with a clamping surface 208 of the female forming tool 122. A grip surface 210 of the gripper plate 204 may be configured to contact the fibrous preform 110. The grip surface 210 may be configured with a relatively high coefficient of static friction and/or kinetic friction, whereas each female forming tool clamping surface 208 may be configured with a relatively low coefficient of static friction and/or kinetic friction. The grip surface 210, for example, may be textured whereas each female forming tool clamping surface 208 may be smooth; e.g., polished. The grip surface 210 may also be formed from a material with a higher coefficient of static friction and/or kinetic friction than the material of the female forming tool 122.

The grip surface 210 of FIG. 6A may be aligned with a respective portion of the female forming tool clamping surface 208. The grip surface 210 of FIG. 6A, for example, at least partially or completely laterally and/or longitudinally overlaps the respective portion of the female forming tool clamping surface 208.

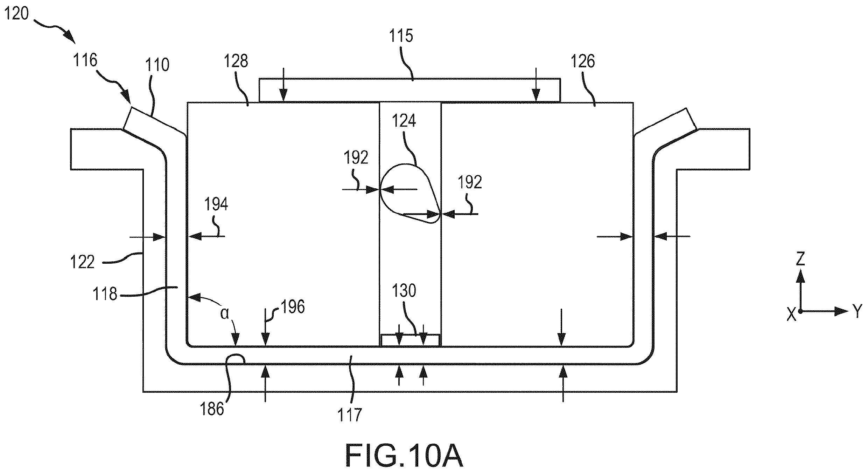

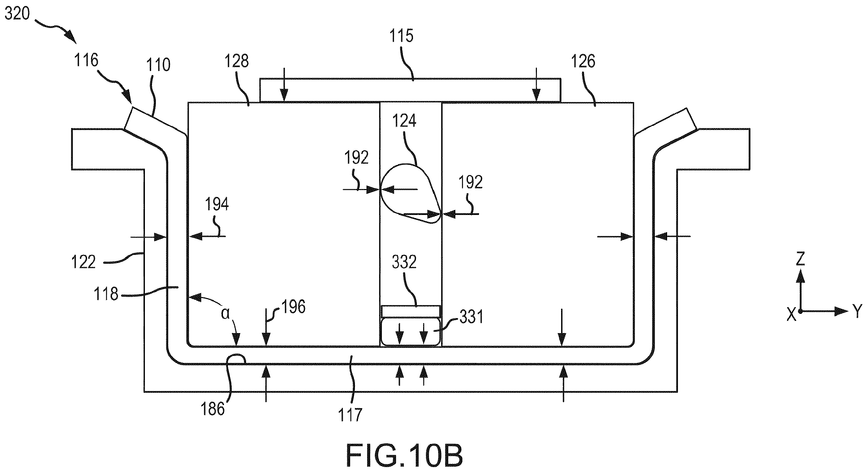

In various embodiments, the gripper plates 204 may be controlled-e.g., by a control unit 201-in concert with the cam 124. In various embodiments, control unit 201 includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. In various embodiments, the control unit 201 controls, at least various parts of, and operation of various components of, the shape forming tool 120. The control unit 201 may control a position of the expander tool (e.g., cam 124), thereby indirectly controlling positions of the first die half 126 and second die half 128. The control unit 201 may control a position of the gripper plates 204. The control unit 201 may control a position of the caul plate (e.g., see caul plate 130 of FIG. 10A and/or plate 332 and bladder 331 of FIG. 10B).

In various embodiments, control unit 201 may be configured to send a control signal to the expander tool, such as cam 124, to actuate first die half 126 and second die half 128. Control unit 201 may be further configured to send a control signal to gripper plates 204 to control a clamping pressure and/or a clamping tension applied to the fibrous preform 110 by the gripper plates 204. Control unit 201 may be configured to receive feedback signals (e.g., via a force sensor or the like) from gripper plates 204 (e.g., indicating a clamping force and/or a tension force applied to the fibrous preform 110 by the gripper plates) and may control the expander tool and/or the gripper plates 204 in concert based upon these feedback signals. In this manner, tension exerted by gripper plates 204 and the shape forming pressure applied by first die half 126 and second die half 128 may be actively adjusted simultaneously, or nearly simultaneously, during the manufacturing process.

In various embodiments, gripper plates 204 comprise one or more actuators 215, schematically shown in FIG. 6A, configured to control lateral movement of the gripper plates 204 to apply tension to fibrous preform 110. In various embodiments, actuators 215 are linear actuators configured to move gripper plates 204 laterally with respect to female forming tool 122. Actuators 215 may cause the fibrous preform 110 to be further tensioned as the expander tool expands (e.g., as cam 124 rotates). In this regard actuators 215 may be controlled by control unit 201.

In various embodiments, and with reference to FIG. 6B, grip surface 210 of one or more gripper plates 204 may also include one or more protrusions 212 for penetrating into the fibrous preform 110. The protrusions 212 may thereby lock a portion of the fibrous preform 110 in place; e.g., constrain movement of the respective engaged preform portion.

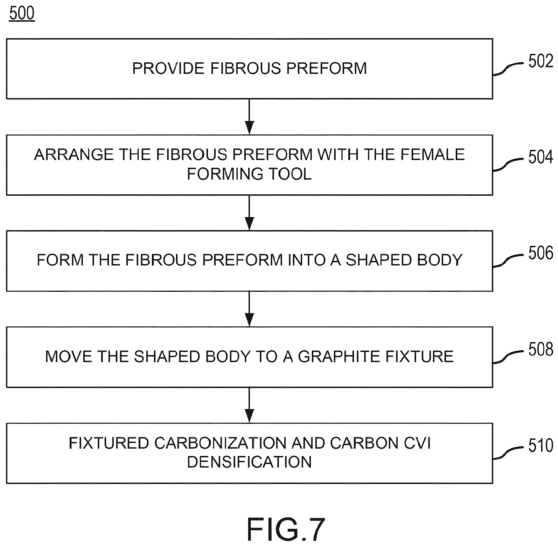

With reference to FIG. 7, a flow diagram of a method 500 for forming a fibrous OPF preform 110 into a shaped body is provided, in accordance with various embodiments. For ease of description, the method 500 is described below with reference to FIG. 1A, FIG. 1B, FIG. 5, FIG. 6A, and FIG. 6B. The method 500 of the present disclosure, however, is not limited to use of the exemplary shape forming tool 120 of FIG. 1A, FIG. 1B, FIG. 5, FIG. 6A, and FIG. 6B.

In step 502, the fibrous preform 110 is provided. Fibrous preform 110 may be configured as a multi-layered preform. The preform 110 of FIG. 6A and FIG. 6B, for example, includes a stack 114 of a plurality of layers of material 111A-C (generally referred to as "111"). This stack 114 includes the top layer of material 111A at / forming a top side of the fibrous preform 110 and the bottom layer of material 111B at / forming a bottom side of the fibrous preform 110. The stack 114 may also include at least one (or more) intermediate layer of material 111C vertically between the top layer of material 111A and the bottom layer of material 111B.

Each layer of material 111 may share a common (e.g., the same) construction and/or material makeup. Each layer of material 111 in the stack 114, for example, may be formed by a sheet / layer of fibrous material; e.g., non-woven oxidized polyacrylonitrile (PAN) fibers. However, one or more layers of dissimilar construction may also be included (e.g., a non-woven with a chopped fiber mat sacrificial material).

In step 504, the fibrous preform 110 is arranged with the female forming tool 122. The fibrous preform 110 is disposed on the female forming tool 122 at its top side 180 (see FIG. 5). The bottom layer of material 111B may engage (e.g., vertically contacts, is abutted against, lays flush on, etc.) the female forming tool top surfaces 184. In various embodiments, heat is added to the fibrous preform 110 during the shape forming process. For example, tool 120 may be heated whereby heat is conducted from the tool 120 into the fibrous preform 110. In various embodiments, it is further contemplated that heaters, separate from the tool 120, may be provided for heating the fibrous preform 110 during the shape-forming process. In various embodiments, components of the shape forming tool 120 may be heated in an oven prior to being introduced to the fibrous preform 110, for example to a shape forming temperature of between 150°F and 400°F (65°C - 205°C) in various embodiments, between 200°F and 350°F (93°C - 177°C) in various embodiments, between 200°F and 300°F (93°C - 149°C) in various embodiments, and between 225°F and 275°F (107°C - 135°C) in various embodiments.

In various embodiments, moisture is added to the fibrous preform 110 during the shape-forming process. For example, a sizing agent comprising a fluid and/or fluid vapor such as water, steam, and/or polyvinyl alcohol may be applied to the fibrous preform 110 (e.g., before being shape formed). Adding the sizing agent to the fibrous preform 110 may dampen the fibers thereof which tends to relax the fibers of the fibrous preform, thereby aiding in the bending, forming, and/or stretching of the fibrous preform. Adding the sizing agent to the fibrous preform 110 may tend to reduce wrinkling of the fibrous preform 110. Sizing may help to protect the fiber from handling damage and provide lubricity allowing the fibers to slide easily during preforming/compaction and aid in preventing wrinkling and kinking. Sizing agents of the present disclosure include water soluble polymers. The sizing agent may comprise a water solution. The sizing agent and may comprise long chain alcohols such as polyvinyl alcohols, modified starch, cellulose gum such as carboxymethyl cellulose, modified wax, acrylates, and/or mixtures thereof. In various embodiments, up to about 700 mL (23.7 fluid oz) of water or more may be applied to the fibrous preform 110, though the amount of water is a variable parameter based on a variety of factors, including the size and volume of the fibrous preform 110. In various embodiments, approximately 1 milliliter (ml) of water may be added for every 2.5 cubic inches of fibrous preform (1ml / 2.5in³), wherein the term approximately as used in this context can only mean ±0.5ml. Stated differently, between 0.5ml and 1.5ml of water may be added to the fibrous preform for every 2.5 cubic inches of fibrous preform. However, it should be understood that other amounts of water or sizing agent may be added to the fibrous preform without departing from the scope of the present disclosure. Moreover, the fibrous preform may be preconditioned in a humidity chamber at a humidifying temperature (e.g., between 100°F (37.8°C) and 200°F (93.3°C)) and a relative humidity (e.g., between 75% and 90% humidity). Adding the sizing agent to the fibrous preform 110 may tend to reduce wrinkling of the fibrous preform 110 and support stabilizing the preform into the desired shape. In this manner, the fibrous preform 110 may be compressed to higher fiber volume ratio and formed to shape using heat, moisture, and pressure into contoured shapes using tool 120 as desired for a particular C/C part application.

The fibrous preform 110 may be pushed down (in the negative Z-direction) to the bottom of the recess surface 186 of the female forming tool 122 (see FIG. 6A) (e.g., by hand, using first die half 126 and/or second die half 128, or the like). The bottom layer of material 111B may engage (e.g., vertically contacts, is abutted against, lays flush on, etc.) the female forming tool clamping surfaces 208. The top layer of material 111A may be disposed next to and under the gripper plates 204. The gripper plates 204 of FIG. 6A, for example, are disposed along a periphery of the fibrous preform 110 and its stack 114. More particularly, each of the gripper plates 204 of FIG. 6A (see also FIG. 6B) longitudinally and laterally overlaps the fibrous preform 110 and its stack 114 along opposing sides of the periphery. However, it should be understood that the shape forming process of the present disclosure may be performed without gripper plates 204 (e.g., the periphery of the fibrous preform 110 may extend freely from between the female forming tool 122 and the expandable die halves 126, 128). In the arrangement of FIG. 5, the fibrous preform 110 and its stack 114 of the layers of material 111 may have a planar configuration. Prior to forming the shaped body 116, for example, the fibrous preform 110 and its stack 114 of the layers of material 111 may be configured as a flat plate. Of course, in other embodiments, one or more of the layers of material 111 in the stack 114 may slightly bend (e.g., droop) into the die recess 182.

In step 506, the fibrous preform 110 is formed into the shaped body 116. During this formation step 506, first die half 126 and second die half 128 may move (e.g., downward) vertically from the (e.g., open) position of FIG. 5 to the (e.g., closed) position of FIG. 1B. In various embodiments, first die half 126, second die half 128, and cam 124 are moved downward together as an assembly to rest on the fibrous preform, with the cam 124 fit between the first die half 126 and second die half 128. As the first die half 126 and second die half 128 move, the first die half 126 and second die half 128 vertically engage a portion of the fibrous preform 110 and its stack 114 that overlaps (e.g., spans laterally and longitudinally across) the die recess 182. More particularly, the bottom side 160 vertically presses against the top layer of material 111A.

With the cam 124, first die half 126, and second die half 128 installed over the fibrous preform and at least partially within the die recess 182 (e.g., see FIG. 1A), the cam 124 may be rotated about the longitudinal centerline 102 with respect to the female forming tool 122. As the cam 124 continues to rotate to its (e.g., closed) position of FIG. 1B, the cam 124 transmits a preform compressing force 192 into the first die half 126 and the second die half 128. For example, with particular focus on the second die half 128, preform compressing force 192 is transmitted between cam 124 and contact surface 164 of second die half 128, thereby causing the second die half 128 to move in the lateral direction (e.g., along the Y-axis) to compress (e.g., see compression forces represented by arrows 194 in FIG. 1B) a sidewall 118 of the fibrous preform 110. Although described with respect to second die half 128, it should be understood that cam 124 similarly engages first die half 126 (e.g., with similar forces mirrored about the Z-axis). Expansion timing of cam 124 may depend on physical translation, cycle time, and/or temperature.

A vertical load may be applied to the first die half 126 and the second die half 128 using an apparatus 115, such as a dead weight, a press (e.g., mechanical, pneumatic, hydraulic, heated platen, etc.), or the like. In various embodiments, the total vertical dimensions (e.g., a height; i.e., along the Z-axis) of the first die half 126 and the second die half 128 may be the same. The apparatus 115 may cause the second die half 128 to move (e.g., downward) in the vertical direction (e.g., along the Z-axis) to compress (e.g., see compression forces represented by arrows 196 in FIG. 1B) a bottom wall 117 of the fibrous preform 110.

As the cam 124 continues to move to its (e.g., closed) position of FIG. 1B, the first die half 126 and second die half 128 collectively reshape the stack 114 of the layers of material 111 to conform to (e.g., take the shape of) the recess surface 186. The fibrous preform 110 and its stack 114 of the layers of material 111, more particularly, are press formed (e.g., stamped) into the shaped body 116 between the first die half 126 and second die half 128 and the recess surface 186 of female forming tool 122. Stated differently, rotating cam 124 about centerline axis 102 (e.g., about the X-axis) causes the cam 124 to exert lateral forces (see arrows 192) into the first die half 126 and second die half 128 in a lateral direction (e.g., along the Y-axis), which causes the first die half 126 and the second plug to move in the lateral direction (e.g., along the Y-axis) substantially perpendicular to the longitudinal centerline 102. Stated differently, as the cam 124 increases its lateral dimension, the first die half 126 and the second die half 128 may be moved laterally outward (see FIG. 1B) to accommodate the increasing width of the cam 124, thereby compressing and shaping the sidewalls 118 of the fibrous preform into the shaped body 116. The downward force of apparatus 115 may simultaneously cause the first die half 126 and the second die half 128 to move (e.g., downward) in the vertical direction (e.g., along the Z-axis) to compress (e.g., see compression forces represented by arrows 196 in FIG. 1B) bottom wall 117 of the fibrous preform 110.

In various embodiments, with the cam 124 in the closed position, the shape forming tool 120 and shaped body 116 may be heated to the shape forming temperature (e.g., loaded into an oven) for a predetermined duration (e.g., between an hour and 24 hours in various embodiments). Dead weight (e.g., apparatus 115) may be applied to the top sides of the first die half 126 and second die half 128 while the compressed assembly is in the oven so that the first die half 126 and second die half 128 are biased toward the female forming tool 122 as the shaped body 116 compresses and/or shrinks over time. Moreover, a position of the cam 124 may be controlled (e.g., a rotational position of the cam 124 may be varied over time during the heating process) so that the first die half 126 and second die half 128 are biased toward the female forming tool 122 as the shaped body 116 compresses and/or shrinks over time. Stated differently, the expander tool (e.g., cam 124) may be actuated (e.g., electronically actuated by a control unit) to maintain a predetermined pressure (e.g., as a function of time, temperature, and/or pressure) on shaped body 116 during the heating process. In this manner, first die half 126 and second die half 128 continually apply a compressing force-in both the vertical direction and the lateral direction-to the shaped body 116.

In various embodiments, the heating and load application may occur at the same time by loading the assembly into a heated platen press and allowing the action of the press to drive the first die half 126 and second die half 128 into the closed position while the assembly is simultaneously being heated. In step 508, the shaped body 116 is released from the shape forming tool 120 and moved to a graphite fixture. The cam 124, first die half 126, and second die half 128, for example, are moved vertically away from the female forming tool 122. The cam 124, first die half 126, and second die half 128 may be moved vertically away from the female forming tool 122 using a lifting apparatus coupled to the respective first die half 126 and second die half 128. The gripper plates 204 may be similarly deactivated (if not done so already during the forming). The shaped body 116 may thereby be removed from the die recess 182 for further processing.

Shape forming tool 120 may form the fibrous preform 110 into the shaped body 116 comprising a final, or near final, shape of the desired C/C part. In various embodiments, the shaped body 116 comprises a U-shape cross-sectional geometry (e.g., in the Y-Z plane). In various embodiments, the shaped body 116 comprises a complex curvature, depending on the geometry of the recess surface 186 of the female forming tool 122. With reference to FIG. 1B, shaped body 116 including a sidewall 118 bent at an angle α with respect to a bottom wall 117 is illustrated, in accordance with various embodiments. In various embodiments, angle α is between one degree and one hundred and seventynine degrees (1°-179°), between thirty degrees and one hundred and seventy degrees (30°-170°), between thirty degrees and one hundred and twenty degrees (30°-120°), between forty-five degrees and one hundred and seventy degrees (45°-170°), between sixty degrees and one hundred and seventy degrees (60°-170°), between ninety degrees and one hundred and seventy degrees (90°-170°), between thirty degrees and one hundred and seventy degrees (30°-170°), between eighty degrees and one hundred degrees (80°-100°), or about ninety degrees (90°). The angle α is generally chosen based on the shape of the desired C/C part.

The shape forming tool 120 and its components 122, 124, 126, 128 are described above using the terms "bottom" and "top" with reference to exemplary orientations in the drawings. The present disclosure, however, is not limited to any particular formation system orientations. For example, in other embodiments, the first die half 126 and second die half 128 may alternatively be configured as a bottom die and the female forming tool 122 may alternatively be configured as a top die.

After being shape-formed using the shape forming tool 120, the shaped body 116 may be moved from the metallic shape forming tool 120 to a similarly shaped graphite fixture which is configured to maintain the compressed shape of the shaped body 116 during a subsequent carbonization process. The components of the graphite fixture may be made from a graphite material suitable for withstanding carbonization and/or densification temperatures.

In step 510, and with the shaped body 116 secured in compression within a graphite fixture, the shaped body 116 may be carbonized to maintain shape and decrease fiber volume. In various embodiments, shaped body 116 together with graphite fixture may be placed in a furnace for carbonization. The carbonization process may be employed to convert the fibers of the shaped body 116 into pure carbon fibers, as used herein only "pure carbon fibers" means carbon fibers comprised of at least 99% carbon. The carbonization process is distinguished from the densification process described below in that the densification process involves infiltrating the pores of the shaped body 116 and depositing a carbon matrix within and around the carbon fibers of the shaped body 116, and the carbonization process refers to the process of converting the fibers of the fibrous preform 110 into pure carbon fibers.

The shape-formed fibrous preform 110 may be carbonized by placing the shape-formed fibrous preform 110 in a furnace with an inert atmosphere. In general, the carbonization process involves heating the shape-formed fibrous preform 110 in a furnace to a temperature greater than about 1,600 degrees Celsius (2912 Fahrenheit). Typically, an inert atmosphere of nitrogen, argon or a vacuum is provided in the furnace during the carbonization process. The heat of the furnace causes a chemical conversion of the OPF that converts the fibers to carbon fibers and drives off other chemicals. Although it is sometimes preferred that the fibers in the carbonized fiber preform be 100% carbon fiber, it is generally acceptable for a less than full conversion to take place. The resulting carbonized fiber preform generally has the same fibrous structure as the fibrous preform before carbonizing. During carbonization, the total mass and the total fiber volume in each fibrous preform is typically reduced due to the loss of non-carbon compounds.

Fiber density of the fibrous preform 110 may increase during carbonization (e.g., from about 1.37 g/cc in OPF state to about 1.77-1.85 g/cc after carbonization, depending on the final carbonization temperature). In various embodiments, the OPF fibers shrink during carbonization, as OPF may have a char/carbon yield of around 50%. As used herein "char/carbon yield" means the remaining mass of the OPF after degrading the OPF using the carbonization process.

After carbonization, the carbonized shaped body 116 may be densified using chemical vapor infiltration (CVI), as described in further detail below. After carbonization, shaped body 116 may be densified. In various embodiments, the shaped body 116 is removed from graphite fixture prior to densification. In various embodiments, the shaped body 116 is placed in a perforated graphite fixture during one or more densification runs. The shaped body 116 may be densified with pyrolytic carbon by CVI using optimized process conditions to maintain shape and support efficient carbon densification. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases (e.g., at least one of methane, ethane, propane, butane, and/or the like, as described herein) into the furnace and around and through the fibrous preforms. In various embodiments, the CVI/CVD process may include a temperature gradient. In various embodiments, the CVI/CVD process may include a pressure gradient. In various embodiments, the CVI/CVD process may include a temperature and a pressure gradient.

CVI/CVD densification may be conducted in a vacuum or partial vacuum (e.g., at pressures of 1-15 torr) or in an inert atmosphere at a temperature in the range from about 900°C to about 1100°C (1,652°F to about 2,012°F), and in various embodiments in the range of up to about 1,000°C (1,832°F) (wherein the term about in this context only means +/- 100°C) for a period of time in the range from about 150 hours to about 650 hours, and in various embodiments, in the range from about 300 hours to about 500 hours (wherein the term about in this context only means +/- 24 hours).

As a result, carbon from the hydrocarbon gases separates from the gases and is deposited on and within the fibrous preforms. Typically, the densification process is continued until the preform reaches a density in the range from 1.6 to 1.9 grams per cubic centimeter (g/cc), and in various embodiments, a density of approximately 1.80 g/cc. When the densification step is completed, the resulting C/C part has a carbon fiber structure with a carbon matrix infiltrating the fiber structure, thereby deriving the name "carbon/carbon."

After a first CVI/CVD cycle of 300 to 500 hours, an intermediate heat treat is typically performed, in the same furnace. This heat treat (>1600°C) serves to dimensionally stabilize the shaped body 116, increase its thermal properties, and increase its porosity for subsequent densification. The shaped body 116 may then be machined to open the porosity further, to help allow for final density to be achieved using only one more CVI/CVD cycle. Part densities after first machining may be in the range of 1.4 to 1.7 g/cc, depending on the part thickness, overall size, and placement within the furnace. Typical, average density range is 1.55-1.65 g/cc.

The densification process may be continued until the preform reaches a desired density, for example in the range from 1.7 to 1.9 grams per cubic centimeter (g/cc), and in various embodiments, a density of approximately 1.80 g/cc. The CVI/CVD process may be continued with the shaped body 116 removed from the perforated graphite fixture. In this manner, the outer surfaces of the shaped body 116 may be more directly exposed to the gas flow. Moreover, the shaped body 116 may be machined in between carbon CVI densification processes (e.g., between fixtured carbon CVI densification and non-fixtured carbon CVI densification and/or between successive non-fixtured carbon CVI densification processes). Machining (e.g., grinding, sanding, milling, grit blasting, etc.) the shaped body 116 may be performed to achieve a final desired part shape. Machining the shaped body 116 may be performed to expose voids, or pores, of the shaped body 116 so as to facilitate infiltration with additional carbon material during subsequent carbon CVI densification. When the densification step is completed, and the desired density is achieved, the resulting C/C part has a carbon fiber structure with a carbon matrix infiltrating the fiber structure, thereby deriving the name "carbon/carbon."

Following the CVI/CVD densification process, the C/C part may undergo a final heat treatment (FHT) process. This may be done using the same furnace used for densification or a different furnace. If done using the same furnace, the flow of hydrocarbon gases would be stopped following the end of the densification process and the temperature increased. FHT may be conducted in a vacuum or partial vacuum (e.g., at pressures of 1-15 torr) or in an inert atmosphere at a temperature in the range from about 1200°C to about 2600°C (2,921°F to about 4,712°F), and in various embodiments in the range from about 1400°C to about 2200°C (2,552°F to about 3,992°F) (wherein the term about in this context only means +/- 100°C) for a period of time in the range from about 4 hours to about 14 hours, and in various embodiments, in the range from about 8 hours to about 12 hours (wherein the term about in this context only means +/- 2 hours). In various embodiments, the FHT process imparts high temperature dimensional stability to the final C/C part. In various embodiments, the FHT process imparts desired thermal properties associated with thermal shock such as high thermal conductivity, high heat capacity, and/or high emissivity.

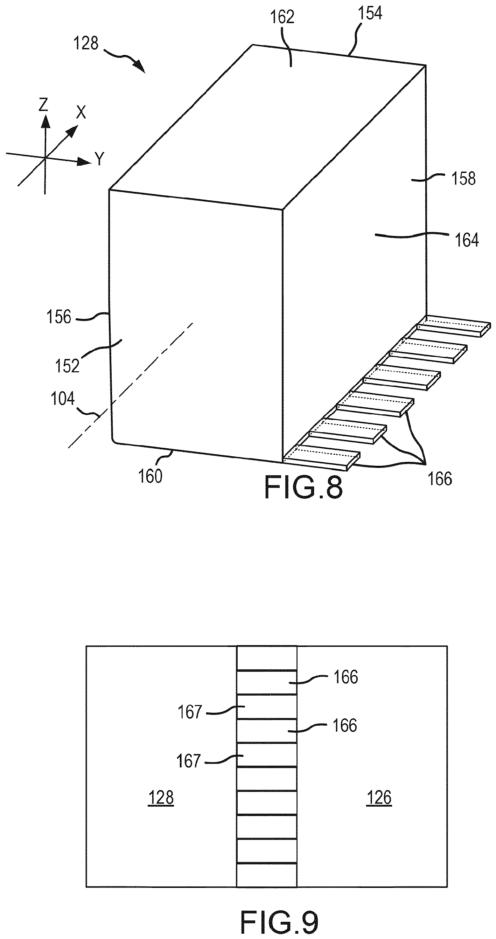

With respect to FIG. 8, elements with like element numbering, as depicted in FIG. 3, are intended to be the same and will not necessarily be repeated for the sake of clarity.

FIG. 8 is a perspective view of second die half 128, in accordance with various embodiments. Second die half 128 may further include a plurality of feet 166 (also referred to as caul plates) extending from second side 158. The plurality of feet 166 may be flush with the bottom side 160 of the second die half 128 so as to apply a compression force to the preform 110 during the shape forming process.

FIG. 9 is a top view of the first die half 126 and second die half 128 in an installed position, each comprising a plurality of feet 167 and 166, respectively. Each foot of the plurality of feet 166 may be interposed between feet of the plurality of feet 167. Likewise, each foot of the plurality of feet 167 may be interposed between feet of the plurality of feet 166. In this manner, the preform 110 may be uniformly compressed at the location between first die half 126 and second die half 128 during the shape forming process. Plurality of feet 166 and 167 may be configured to mitigate ridges caused by the tooling surfaces (e.g., at the edges of first die half 126 and/or second die half 128) during pre-carbonization compression using shape forming tool 120. In this manner, Plurality of feet 166 and 167 may facilitate even distribution of forces from the male dies onto the fibrous preform 110.

With respect to FIG. 10A and FIG. 10B, elements with like element numbering, as depicted in FIG. 1B, are intended to be the same and will not necessarily be repeated for the sake of clarity.

FIG. 10A is a schematic view of shape forming tool 120, in accordance with various embodiments. In various embodiments, shape forming tool 120 further comprises a caul plate 130 disposed between first die half 126 and second die half 128. Caul plate 130 may be made from a rubber material, a metal or metal allow material, or any other suitable material. Caul plate 130 may be configured to mitigate ridges caused by the tooling surfaces (e.g., at the edges of first die half 126 and/or second die half 128) during pre-carbonization compression using shape forming tool 120. In this manner, caul plate 130 may facilitate even distribution of forces from the male dies onto the fibrous preform 110.

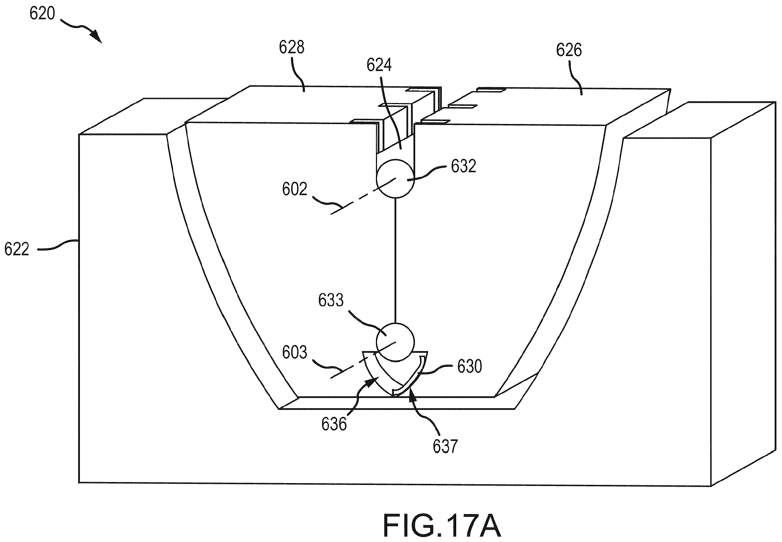

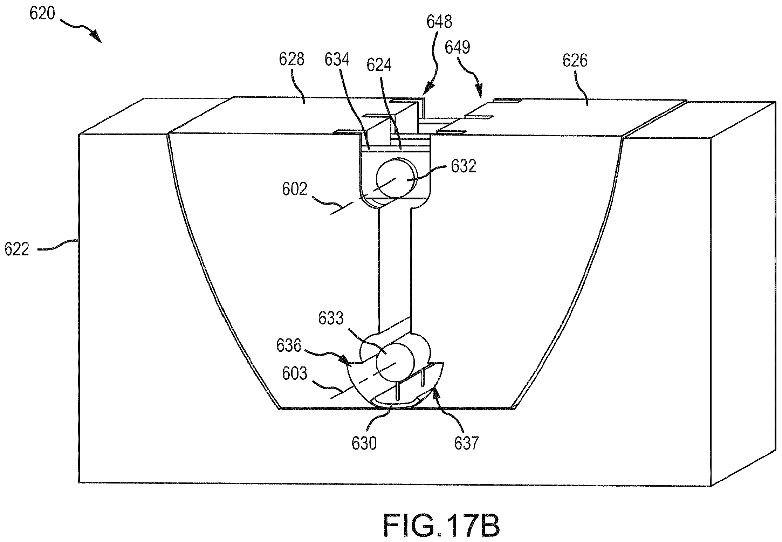

In various embodiments, caul plate 130 is attached to the cam 124 (e.g., to the cam shaft 132) and actuated in concert with cam 124. In various embodiments, caul plate 130 is actuated separately from cam 124. For example, with momentary reference to FIG. 17A and FIG. 17B, a shape forming tool 620 is illustrated with a female forming tool 622, a first die half 626, and a second die half 628. In various embodiments, first and second die halves 626 and 628 comprise cam portions 648 and 649 (slots or pockets), respectively, configured to accommodate cam lobes 634 of cam 624. Cam lobes 634 of cam 624 may be coupled to, and rotate together with, cam shaft 632. Cam shaft 632 may comprise a central longitudinal axis 602. In various embodiments, cam 624 is located at or near the top ends of first and second die halves 626 and 628.

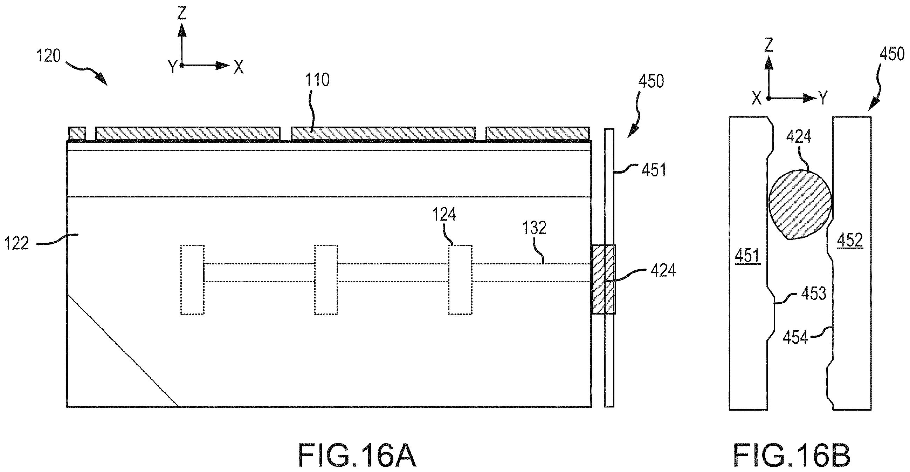

In various embodiments, first and second die halves 626 and 628 comprise pockets 636 and 637, respectively, configured to accommodate caul plate 630. In various embodiments, caul plate 630 is located at the bottom ends of first and second die halves 626 and 628. Caul plate 630 may be coupled to, and rotate together with, a secondary cam shaft 633. Secondary cam shaft 633 may comprise a central longitudinal axis 603. As the cam 624 is activated, first and second die halves 626 and 628 may expand from a first position (see FIG. 17A) to a second (expanded) position (see FIG. 17B). The secondary camshaft 633 may be assembled into a tool, similar to the primary (top) camshaft 632, for example see mechanical actuator 450 of FIG. 16A and FIG. 16B. The secondary camshaft 633 may be actuated concurrently with the main expander tool camshaft 632 (e.g., sent the same control signal) or actuated in series (i.e., after expansion is complete). In response to being actuated, secondary camshaft 633 may rotate the caul plate 630 toward female forming tool 622 in between first die half 626 and second die half 628 to apply a compressing force to the fibrous preform 110. In this manner, caul plate 630 may be utilized to apply compression forces (pressure) to a middle portion of the bottom of the fibrous preform 110.

FIG. 10B is a schematic view of shape forming tool 120 with a bladder 331 being used in place of caul plate 130. In this regard, in the alternative, or in addition, to caul plate 130, a bladder 331 may be used to compress fibrous preform 110 at the gap between first die half 126 and second die half 128. Bladder 331 may be pneumatically or hydraulically actuated. Bladder 331 may be mounted to a plate 332 mounted with respect to female forming tool 122 to compress the bladder 331 against fibrous preform 110. In various embodiments, bladder 331 may be actuated in concert with cam 124 to evenly apply pressure to fibrous preform 110. Bladder 331 may be configured to apply a force to fibrous preform 110 in a direction that is parallel to the force applied to first die half 126 and second die half 128 by apparatus 115 (e.g., along the Z-direction). Bladder 331 may be configured to apply a force to fibrous preform 110 in a direction (e.g., the negative Z-direction) that is perpendicular to the lateral direction (e.g., the Y-direction)

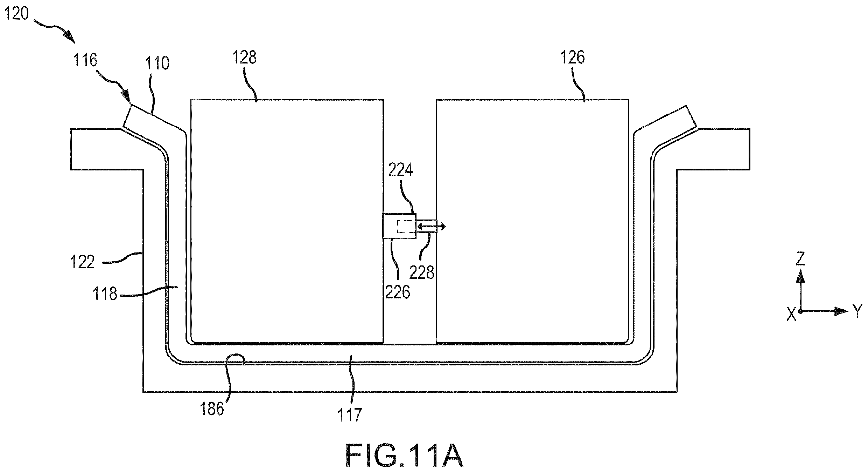

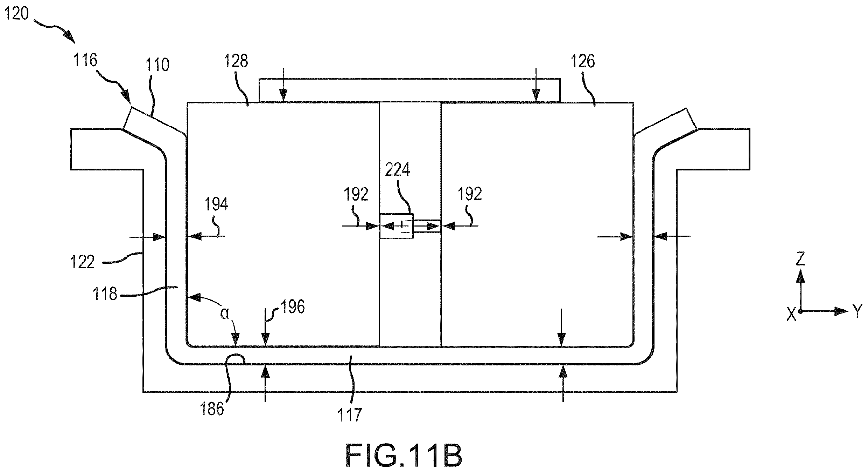

With respect to FIG. 11A and FIG. 11B, elements with like element numbering, as depicted in FIG. 1A and FIG. 1B, are intended to be the same and will not necessarily be repeated for the sake of clarity. FIG. 11A and FIG. 11B are schematic views of a shape forming tool 120 with the expander tool comprising a linear actuator 224 instead of a cam. Linear actuator 224 may be a hydraulic, pneumatic, or electro-mechanical actuator. Linear actuator 224 may generally comprises a fixed portion 226 (e.g., a cylinder or the like) and a moveable portion 228 (e.g., a piston or the like). The moveable portion 228 may extend from the fixed portion 226 to move the first die half 126 away from the second die half 128 to compress the sidewalls 118 of the fibrous preform 110. FIG. 11A illustrates the linear actuator in a first state (e.g., a retracted position) and FIG. 11B illustrates the linear actuator in a second state (e.g., an extended position) and reacting a compression force between the first die half 126 and the second die half 128 to compress the sidewalls 118 of the fibrous preform 110. Expansion timing of linear actuator 224 may depend on physical translation, cycle time, and/or temperature.

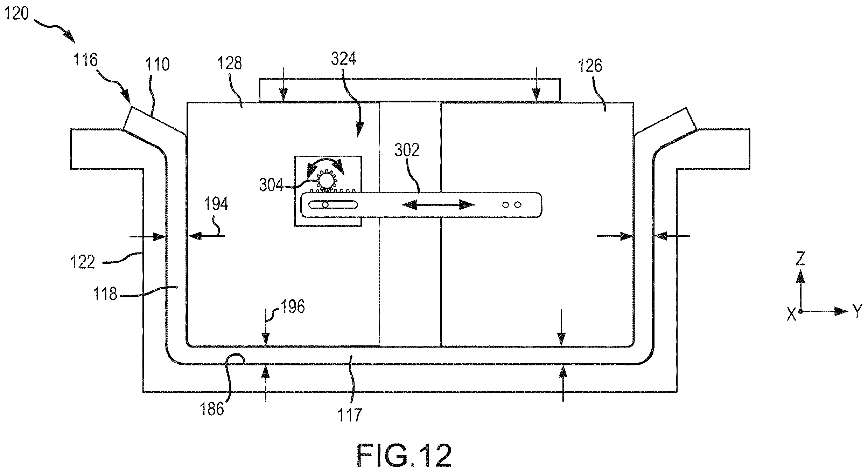

FIG. 12 is a schematic view of a shape forming tool 120 with the expander tool comprising a linear slider 324, in accordance with various embodiments. In various embodiments, linear slider comprises a reciprocating rod member 302 fixed to first die half 126 (e.g., via one or more fasteners for example) and slidingly coupled to second die half 128 (e.g., via a sliding joint for example). A gear 304 may meshingly engage reciprocating rod member 302 whereby rotation of the gear 304 is translated into linear motion of reciprocating rod member 302. In various embodiments, gear 304 and reciprocating rod member 302 may be configured as a rack and pinion. The first die half 126 may move together with reciprocating rod member 302. In this manner, rotation of gear 304 in a first rotational direction (e.g., the clockwise direction in FIG. 12) may cause first die half 126 and second die half 128 to move toward one another. Conversely, rotation of gear 304 in a second rotational direction (e.g., the counterclockwise direction in FIG. 12) may cause first die half 126 and second die half 128 to move away from one another, thereby compressing the fibrous preform 110 against female forming tool 122.

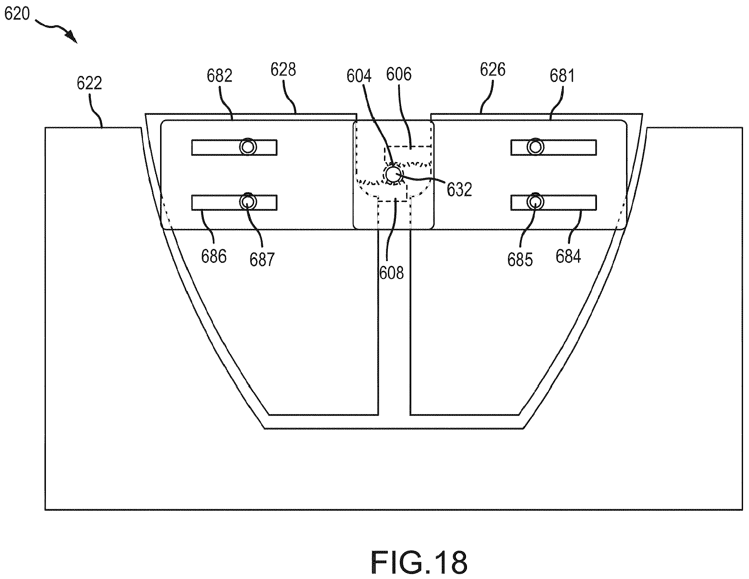

With momentary reference to FIG. 18, a schematic view of a shape forming tool 620 is illustrated, in accordance with various embodiments. In various embodiments, the expander tool comprises a gear 604, a first gear rack 606 coupled to first die half 626, and a second gear rack 608 coupled to second die half 626. The first gear rack 606 and the second gear rack 608 may be actuated in opposite lateral direction by rotating gear 604. In various embodiments, first gear rack 606 is located opposite the second gear rack 608 from gear 604. In various embodiments, the gear 604 comprises a shaft 632 mounted to a first mounting plate 681 and a second mounting plate 682. Shaft 632 may extend through center holes in the mounting plates 681, 682 for supporting and maintaining the gear 604 aligned with the gear racks 606, 608. Mounting plate 681 may comprise slotted bolt holes 684 configured to receive a bolt 685 mounted to first die half 626. Mounting plate 682 may similarly comprise slotted bolt holes 686 configured to receive a bolt 687 mounted to second die half 628. In this manner, the slotted bolt holes 684, 686 allow the first and second die halves 626, 628 to translate and expand while maintaining alignment thereof. It should be understood that cam 124 as described herein may similarly be mounted to the shape forming tool (i.e., using mounting plates 681, 682) without departing from the scope of the present disclosure.

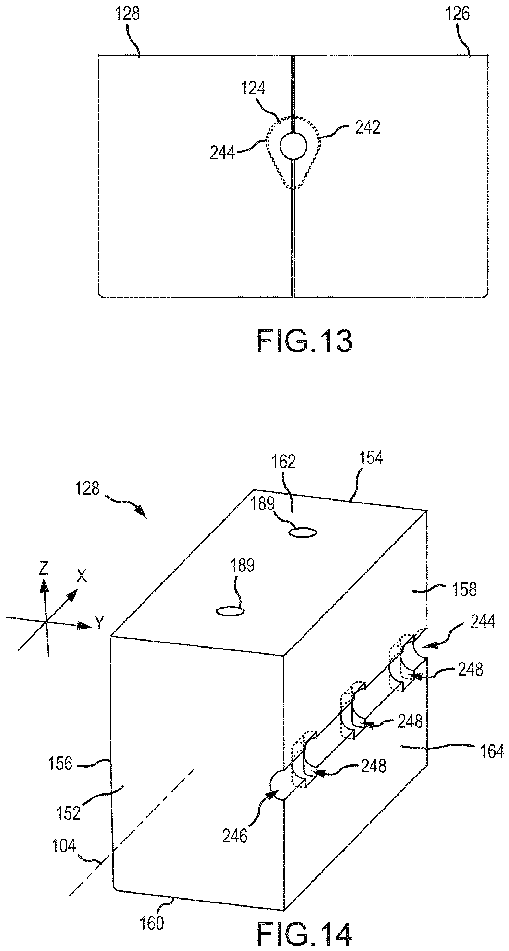

FIG. 13 is a schematic view of the first die half 126 and the second die half 128 each comprising a channel 242 and 244, respectively, for accommodating the cam 124 therebetween. For example, channel 242 may accommodate a first half of cam 124 and channel 244 may accommodate a second half of cam 124.

FIG. 14 is a perspective view of second die half 128 with channel 244 disposed in second side 158. In various embodiments, channel 244 may comprise a shaft portion extending longitudinally (e.g., along the X-axis) through second die half 128 and one or more cam portions 248 (or pockets) configured to accommodate cam lobes 134 of cam 124. In this manner, channel 244 may allow for proper alignment of cam 124 with respect to second die half 128 as well as aid in retaining cam 124 between first die half 126 and second die half 128.

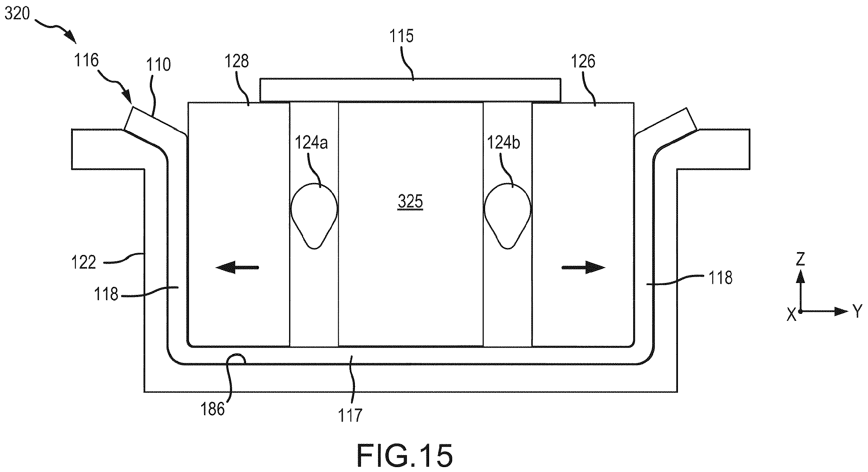

With respect to FIG. 15, elements with like element numbering, as depicted in FIG. 1A and FIG. 1B, are intended to be the same and will not necessarily be repeated for the sake of clarity.

FIG. 15 is a schematic view of a shape forming tool 320 for pre-carbonization compression and shaping a fibrous preform 110, in accordance with various embodiments. Shape forming tool 320 may be similar to shape forming tool 120 of FIG. 1A and FIG. 1B, except that shape forming tool 320 further comprises a center die 325 and two expander tools (e.g., cam 124a and cam 124b). Although illustrated as cams 124a and 124b, it should be understood that the expander tools of shape forming tool 320 may be any suitable expander tool, such as linear actuator 224 described with respect to FIG.11A and FIG. 11B for example. In various embodiments, center die 325 remains generally stationary along the lateral direction (i.e., does not move along the Y-axis). The first expander tool (e.g., cam 124a) may be actuated (e.g., rotated in the case of cam 124a) to move second die half 128 laterally toward female forming tool 122 to compress the sidewall 118 of fibrous preform 110. Likewise, the second expander tool (e.g., cam 124b) may be actuated (e.g., rotated in the case of cam 124b) to move first die half 126 laterally toward female forming tool 122 to compress the opposite sidewall 118 of fibrous preform 110. Apparatus 115 may contact the top surfaces of first die half 126, second die half 128, and center die 325 to move the first die half 126, second die half 128, and center die 325 downward (e.g., in the negative Z-direction) to compress the bottom wall 117 of the fibrous preform 110.

With respect to FIG. 16A and FIG. 16B, elements with like element numbering, as depicted in FIG. 1A and FIG. 1B, are intended to be the same and will not necessarily be repeated for the sake of clarity.

FIG. 16A is a schematic side view of a mechanical actuator 450 for cam 124 of shape forming tool 120, in accordance with various embodiments. In this regard, instead of, or in addition to, electronic actuation, a mechanical actuator 450 may be implemented for controlling a rotational position of cam 124. Mechanical actuator 450 may comprise a driving cam lobe 424 coupled to the cam shaft 132 extending from an end of the female forming tool 122. In this regard, driving cam lobe 424 may rotate together with, and drive rotation of, cam shaft 132.

FIG. 16B is a view taken perpendicular from the view of FIG. 16A (i.e., looking from the right side of FIG. 16A). Mechanical actuator 450 may further comprise a first guide plate 451 and a second guide plate 452. First guide plate 451 and second guide plate 452 may be two separate plates, or may be made as a single (monolithic) plate. First guide plate 451 may be disposed opposite driving cam lobe 424 from second guide plate 452. Vertical translation of first guide plate 451 and second guide plate 452 may be converted into rotation of cam shaft 132. In various embodiments, the contact surfaces 453 and 454 of first guide plate 451 and second guide plate 452, respectively, may be shaped to control the rotational position of the cam shaft 132 as a function of the vertical position of first guide plate 451 and second guide plate 452. In various embodiments, first guide plate 451 and second guide plate 452 are mounted to first die half 126 and/or second die half 128 such that the guide plates 451, 452 rotate cam 124 as the male die assembly (i.e., first die half 126 and second die half 128) translates (e.g., in the negative Z-direction) into the female die recess 182.

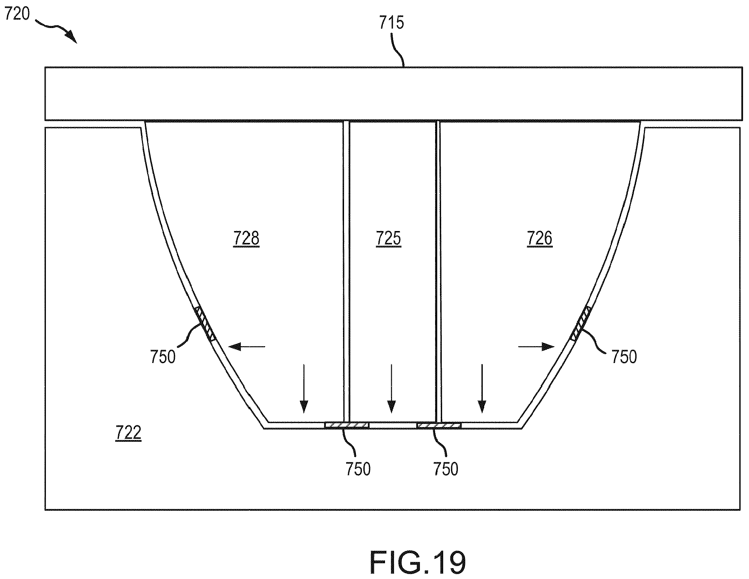

FIG. 19 is a schematic view of a shape forming tool 720 for pre-carbonization compression and shaping a fibrous preform, in accordance with various embodiments. Shape forming tool 720 includes mechanical stops 750 for mechanically limiting the expansion of the actuated dies (e.g., first die half 726, second die half 728, and/or center die 725) with respect to the female forming tool 722. Stated differently, mechanical stops 750 may set a minimum gap between the actuated dies and the female forming tool 722 to control a thickness of the fibrous preform. In various embodiments, mechanical stops 750 are coupled to the female die 722. In various embodiments, mechanical stops 750 are disposed between the female die 722 and the actuated male dies (e.g., first die half 726, second die half 728, and/or center die 725). Providing mechanical stops 750 tends to enforce a uniform thickness across the part being formed. In this regard, apparatus 715 (e.g., a dead weight, a press, or the like) may cause the male dies (e.g., first die half 726, second die half 728, and/or center die 725) to move toward female die 722, thereby compressing the fibrous preform, until the gap between the male dies and the female die 722 is equal to the thickness of the mechanical stops 750. It should be understood that mechanical stops 750 may be utilized with any of the shape forming tools of the present disclosure, and are not limited to the exemplary shape forming tool 720 illustrated in FIG. 19.

Systems and methods are provided. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A shape forming tool assembly, comprising:
a first shape forming tool sub-assembly comprising a die recess;
a second shape forming tool sub-assembly, comprising:
a first die half configured to be received by the die recess;
a second die half configured to be received by the die recess; and
a first expander tool coupled between the first die half and the second die half;
wherein the first expander tool is configured to move the first die half laterally toward a first side of the first shape forming tool sub-assembly away from the second die half; and
the first expander tool is configured to move the second die half laterally toward a second side of the first shape forming tool sub-assembly away from the first die half.

2. The shape forming tool of claim 1, wherein the first expander tool comprises an actuator.

3. The shape forming tool of claim 1 or 2, further comprising a caul plate configured to be disposed at least partially between the first shape forming tool sub-assembly and the second shape forming tool sub-assembly.

4. The shape forming tool of claim 1, 2 or 3, wherein the second shape forming tool sub-assembly further comprises an apparatus configured to apply a force to the first die half and the second die half, wherein the force is perpendicular to a lateral direction.

5. The shape forming tool of any preceding claim, wherein the second shape forming tool sub-assembly further comprises:
a bladder configured to be disposed between the first die half and the second die half; and/or
a center die disposed between the first die half and the second die half, and a second expander tool disposed between the second die half and the center die,
wherein the first expander tool is disposed between the first die half and the center die.

6. The shape forming tool of any preceding claim, further comprising a mechanical stop disposed between the female forming and at least one of the first die half or the second die half, wherein the mechanical stop is configured to mechanically limit an expansion of the at least one of the first die half or the second die half.

7. A shape forming tool sub-assembly, comprising:
a first die half;
a second die half moveable with respect to the first die half; and
a first expander tool coupled between the first die half and the second die half;
wherein, in response to actuating the first expander tool, the first die half is configured to move away from the second die half.

8. The shape forming tool sub-assembly of claim 7 or the shape forming tool of any of claims 1 to 6, wherein the first die half comprises a first channel configured to accommodate a first half of the first expander tool and the second die half comprises a second channel configured to accommodate a second half of the first expander tool.

9. The shape forming tool sub-assembly of claim 7 or 8, or the shape forming tool of any of claims 1-6 or 8, wherein the first die half comprises a first plurality of feet and the second die half comprises a second plurality of feet, and the first plurality of feet are configured to be interposed between the second plurality of feet.

10. The shape forming tool sub-assembly of claim 7, 8 or 9, further comprising a caul plate configured to be disposed proximate to at least one of the first die half and the second die half, and wherein the caul plate is configured to be disposed at least partially between the at least one of the first die half and the second die half and a fibrous preform.

11. The shape forming tool sub-assembly of any of claims 7 to 10, further comprising:
a bladder configured to be disposed between the first die half and the second die half, and/or
a center die disposed between the first die half and the second die half, and
a second expander tool disposed between the second die half and the center die,
wherein the first expander tool is disposed between the first die half and the center die.

12. The shape forming tool sub-assembly of any of claims 7 to 11, wherein the first expander tool comprises a linear actuator.

13. The shape forming tool sub-assembly of any of claims 7 to 11 or the shape forming tool of any of claims 1 to 6, 8 or 9, wherein the first expander tool comprises one of:
a cam shaft; or
a reciprocating rod member and a gear configured to meshingly engage with the reciprocating rod member.

14. A method for manufacturing a composite part, the method comprising:
positioning a fibrous preform with a first shape forming tool sub-assembly, the first shape forming tool sub-assembly comprising a die recess;
forming the fibrous preform into a shaped body, the forming comprising:
moving a second shape forming tool sub-assembly at least partially into the die recess of the first shape forming tool sub-assembly and over the fibrous preform, wherein the second shape forming tool sub-assembly comprises a first die half, a second die half, and an expander tool disposed between the first die half and the second die half;
actuating the expander tool; and
applying a force to the first die half and the second die half to move the first die half and the second die half along a first axis;
in response to actuating the expander tool, moving the first die half away from the second die half along a second axis different from the first axis.

15. The method of claim 14, further comprising, in response to the first die half moving away from the second die half, compressing the fibrous preform between the first die half and the first shape forming tool sub-assembly and between the second die half and the first shape forming tool sub-assembly.
